Europäisches Patentamt

European Patent Office

Office européen des brevets

(19)

(11) Veröffentlichungsnummer: **0 113 095 B1**

(12) **EUROPÄISCHE PATENTSCHRIFT**

(45) Veröffentlichungstag der Patentschrift:
**12.04.89**

(21) Anmeldenummer: **83112741.0**

(22) Anmeldetag: **17.12.83**

(51) Int. Cl.⁴: **B 60 J 5/04**

(54) **Fahrzeugtür.**

(30) Priorität: **29.12.82 DE 3248476**

(43) Veröffentlichungstag der Anmeldung:
**11.07.84 Patentblatt 84/28**

(45) Bekanntmachung des Hinweises auf die Patenterteilung:
**12.04.89 Patentblatt 89/15**

(84) Benannte Vertragsstaaten:
**FR GB IT NL SE**

(56) Entgegenhaltungen:
**DE-B- 1 267 116**
**DE-C- 883 091**

(73) Patentinhaber: **M.A.N. Nutzfahrzeuge GmbH, Dachauer Strasse 667 Postfach 50 06 20, D-8000 München 50 (DE)**

(72) Erfinder: **Mago, Zoltan, Ahornstrasse 7, D-8039 Puchheim (DE)**

## Beschreibung

Bekannte Fahrzeugtüren, insbesondere die Türen für Lastkraftwagen-Fahrerhäuser, sind aus einem Außen- und einem Innenblech gebildet, welche miteinander verbunden sind und eine sogenannte Rohtür bilden, deren Innenseite mindestens zum Teil durch eine Verkleidung abgedeckt ist, und mit mindestens einer insbesondere beweglich angeordneten Fensterscheibe, die über einen Rahmen dichtend mit der Rohtür verbunden ist, wobei die Rahmen-Außenseite auf einem Vorsprung der Rohtür aufsitzt.

Diese Rohtür sollte möglichst verwindungssteif sein, da sie alle auftretenden Belastungen der fertigen Tür aufzunehmen hat.

Die Rohtür weist Fensteröffnungen auf, und zwar eine erste Fensteröffnung für ein Ausstellfenster, dessen Scheibe um eine im wesentlichen vertikale Achse schwenkbar ist, und eine zweite Fensteröffnungen für ein Hubfenster, dessen Scheibe anhebbar bzw. absenkbar ist.

Der Rahmen des Ausstellfensters ist von einem nachgiebigen Gummiprofil gebildet, welches auf eine einwärtsweisende Umfangskante der Fensteröffnung aufgedrückt ist. In der Oberseite des Gummiprofiles ist eine Drehlagerung für einen mit der Scheibe verbundenen Drehzapfen angeordnet, während an der Unterseite des den Fensterrahmen bildenden Profils die Rohtür ausgespart ist. Unterhalb dieser Aussparung ist in der Rohtür eine Drehlagerung angeordnet, welche mit einer Bremseinrichtung verbunden ist. Ein zweiter Drehzapfen, der an der Unterseite der Scheibe des Ausstellfensters angeordnet ist, ist in dieser unteren Drehlagerung aufgenommen, und mittels der Bremse an allzuleichter Drehung gehindert.

Der Einbau dieses Fensters ist umständlich, da seine einzelnen Bestandteile einzeln eingebaut werden müssen, wobei das untere Schwenklager mit der Bremseinrichtung nur schwer zugänglich ist, wenn man nicht in der Nähe eine Aussparung im Innenblech vorsieht, welche ihrerseits aber wiederum dessen Festigkeit beeinträchtigt.

Auch die Stelle, an welcher der untere Schwenkzapfen durch die Unterkante der Fensteröffnung geführt wird, weist diese eine Durchbrechung auf, welche die Verwindungsfestigkeit im Bereich des Ausstellfensters beeinträchtigt.

Schwieriger noch ist die Montage des Hubfensters: Dort ist der Rahmen aus einem portalartigen, zur Fensteröffnung hin offenen Metallprofil gebildet, in welches eine umlaufende Führungsleiste aus flexiblem Material eingelegt ist, welche mittels Dichtungslippen zur abdichtenden Anlage an der Fensterscheibe eingerichtet ist. Ferner weist die Rohtür an der Unterseite der Fensteröffnung einen durchgehenden Schlitz auf.

Unterhalb des Schlitzes sind an der dieser zugewandten Oberfläche des Außen- und Innenblechs Halterungen angeschweißt.

Beim Zusammenbau der Tür wird zunächst der beschriebene Rahmen auf die Fensterscheibe aufgelegt, und der die Fensteröffnung umgebende Flansch wird an seiner Innenoberfläche mit Dichtungsmasse bestrichen. Dann wird der Rahmen mit der Scheibe schräg von oben her durch den beschriebenen Schlitz in der Rohtür hindurchgeschoben, bis der Rahmen genau über dem Flansch liegt. Dann wird der Rahmen gegen den Flansch angedrückt, die Scheibe nach unten abgesenkt, und das Metallprofil mit Führungs- bzw. Dichtungsleiste wird mit Blechschrauben in den Umfangssteg der Fensteröffnung eingeschraubt.

Anschließend werden zwei durch Metallprofile verstärkte Lippendichtungsstreifen auf die vorherbeschriebenen Halterungen unterhalb des Schlitzes aufgepresst. Die zugehörigen Dichtungslippen treten mit der Oberfläche der Scheibe in Eingriff und verhindern, daß Regenwasser in den darunterliegenden Fensterschacht laufen kann.

Diese bekannte Türe weist eine Fülle an Nachteilen auf: Zunächst ist die Festigkeit der Tür verhältnismäßig klein, da das Innenblech durch mehrere Durchbrechungen erheblich geschwächt ist. Ferner ist der Zusammenbau der Tür, wie bereits beschrieben, umständlich, arbeitsintensiv und bedarf großer Geschicklichkeit. Auch bilden jene Stellen, an welche die Halterungen für die unteren Dichtungsleisten des Fensters angeschweißt wurden, sowie jene Stellen, in welche die Befestigungsschrauben für den Fensterrahmen eingreifen, Ausgangspunkte für die Korrosion.

Ein weiterer Nachteil liegt darin, daß die Innenoberfläche der fertigen Tür von der dem Innenraum zugewandten Oberfläche des Innenblechs gebildet ist und bei Lastkraftwagen meist unverkleidet bleibt, so daß die Gestaltung des Fahrzeug-Innenraumes leidet.

Ein weiterer Nachteil liegt darin, daß Armaturen, wie Armstütze, Gehäuse für Innenöffner, Halterung für Innensicherung und Halterung für Vorreiber besonders ausgebildet und an der Oberfläche der Tür befestigt werden müssen.

Ein besonders gravierender Nachteil liegt darin, daß der Ausbau von Teilen manchmal sehr schwierig ist, wie etwa der Ausbau des Fensterrahmens, da dieser noch an der Rohtür anklebt, oder das Auswechseln jener Dichtungsleisten, welche den Fensterschacht nach oben hin abdichten.

In beiden Fällen ist es erforderlich, die Tür mittels eines geeigneten Werkzeuges gewaltsam zu zerlegen, wobei die Lackierung der Tür leicht verkratzt werden kann.

Ausgehend vom obigen Stand der Technik liegt der Erfindung die Aufgabe zugrunde, die bekannte Fahrzeugtür dahingehend weiterzubilden, daß sie die obengenannten Probleme mindestens teilweise vermeidet und insbesondere die Montage bzw. Demontage der einzelnen Teile bei Fertigung und Reparatur wesentlich erleichtert.

Diese Aufgabe wird erfindungsgemäß bei einer Fahrzeugtür nach dem Oberbegriff des Anspruches 1 durch die kennzeichnenden Merkmale des Anspruchs 1 gelöst.

Hierbei bildet die Rohtür bei jeder Fensteröffnung einen einwärts gerichteten, umlaufenden Flansch, gegen den von innen her der Fensterrahmen anliegt. Dieser Fensterrahmen ist aber nicht durch Aufschrauben oder Aufklemmen an der Rohtür befestigt, sondern an der Innenseite der Rohtür ist eine steife Blendschale befestigt, welche im wesentlichen den gleichen Umriß wie der entsprechende Bereich der Tür aufweist und welche so ausgebildet ist, daß sie von der Innenseite der Tür her gegen den oder die Fensterrahmen anliegt und diesen bzw. diese gegen den entsprechenden Flansch der Fensteröffnung andrückt und somit an Ort und Stelle festhält.

Diese Blendschale erstreckt sich mindestens über jenen Bereich der Rohtür, der die Fensteröffnungen aufweist, und kann einstückig oder geteilt ausgebildet sein. Die Blendschale kann sich auch über die gesamte Innenoberfläche der Rohtür erstrecken. Bevorzugt bildet somit die Blendschale mindestens einen Teil der Verkleidung, welche bei der bekannten Tür an der Innenoberfläche der Rohtür angeordnet ist.

Der Hauptvorteil der erfindungsgemäßen Blendschale liegt an der erheblichen Vereinfachung des Aus- und Einbaus der Fenster und ihrer Rahmen: Diese Teile werden als vormontierte Einheit lediglich auf die Rohtür aufgelegt, und anschließend wird die Blendschale auf der Innenoberfläche der Rohtür angebracht. Bei der Reparatur wird die Blendschale abgenommen, das beschädigte Fenster mit Rahmen entfernt und dann entweder repariert oder durch eine neue Einbaueinheit ersetzt.

Es ist auch nicht mehr, wie früher, erforderlich, für die Befestigung des Rahmens Schrauben zu verwenden, so daß die in deren Bereich entstehende Korrosion vermieden wird. Dies ist besonders beim Einsatz von Fahrzeugen in solchen Klimazonen wesentlich, in welchen infolge der hohen Luftfeuchtigkeit alle Teile eines Fahrzeuges in gleicher Weise korrosionsgefährdet sind.

Die Blendschale kann an ihrer Sichtfläche mit einer Bespannung versehen sein, so daß die bisher sehr problematische und bei Lastkraftwagen meist unterlassene Verkleidung der Tür in deren Fensterbereich ohne weiteres und mit geringem Aufwand möglich ist.

Um den Zusammenbau der Tür noch weiter zu erleichtern, sind gemäß einer Ausgestaltung der Erfindung um die Fensteröffnungen an der Innenoberfläche der Rohtür Laschen ausgestanzt, welche nach dem Einlegen der jeweiligen Fensterrahmen über diese gebogen werden, um sie in ihrer Lage solange zu fixieren, bis sie durch die Blendschale fest an Ort und Stelle gehalten werden.

Da für die tiefgezogenen Außen- und Innenbleche einer Tür ohnehin duktile Bleche verwendet werden müssen, können diese Laschen auch mehrmals auf- und wieder zugebogen werden, wenn mehrfach Reparaturen an den Fenstern erforderlich sind.

Im Gegensatz zur bekannten Tür wird beim Ausstellfenster der erfindungsgemäßen Tür auch das untere Schwenklager und die zugehörige Bremse in den zugehörigen Fensterrahmen miteingelassen, so daß das Ausstellfenster mit Rahmen eine eigene, abgeschlossene Baueinheit bildet, und im Bereich der zugehörigen Fensteröffnung keinerlei Durchbruch in der tragenden Rohtür erforderlich ist. Durch diese Ausgestaltung wird auch das Auswechseln des Ausstellfensters wesentlich erleichtert.

Gemäß einer weiteren Ausgestaltung der Erfindung wird der Fensterschacht für das Hubfenster zumindest im Bereich der Unterkante der zugehörigen Fensteröffnung einerseits von der Rohtür und andererseits von der Blendschale begrenzt; so daß die beiden Lippendichtungsstreifen, welche nach unten die Fensterscheibe abdichten, einerseits an der Rohtür und andererseits an der Blendschale befestigt sind. Da die jeweilige Befestigungsstelle vor dem Einlegen des Fensters bzw. nach Abnahme von Blendrahmen und Fenster frei zugänglich sind, ist der früher problematische Einbau und besonders schwierige Ausbau dieser Dichtungsstreifen ganz wesentlich erleichtert. Es ist hierzu auch nicht erforderlich, gesonderte, komplizierte und scharfkantige Halterungen im Bereich des Fensterschachtes anzubringen, so daß bei der Montage die Verletzungsgefahr und bei der fertigen Tür die Korrosionsgefahr erheblich verringert sind.

Bevorzugt weist der Lippendichtungsstreifen im Bereich seiner Unterkante Schlitze auf, die bevorzugt quer zu dieser Kante verlaufen. In Übereinstimmung mit diesen Schlitzen sind an der Innenoberfläche der Rohtür Laschen ausgestanzt und an der dieser zugewandten Oberfläche der Blendschale federnde Zungen angebracht. Bei der Montage wird ein Dichtungsstreifen über die abgespreizten Laschen der Rohtür geschoben und die Laschen werden einfach umgedrückt, wodurch der feste und zuverlässige, aber jederzeit einfach lösbare Sitz des Dichtungsstreifens gewährleistet ist. In ähnlicher Weise wird der andere Dichtungsstreifen mit seinen Schlitzen auf die federnden Zungen der Blendschale aufgesteckt, welche zweischenklig ausgebildet sind und federnd mit ihren Schenkeln den jeweiligen Schlitz durchdringen und hintergreifen. Auch in diesem Fall kann der Aus- und Einbau des entsprechenden Dichtungsstreifens jederzeit und mühelos erfolgen.

Während bei der bekannten Tür der Rahmen des Hubfensters aus einem innen offenen Metallprofil und einer eingelegten Führungs-Dichtungsschiene ausgebildet war, genügt bei der erfindungsgemäßen Tür lediglich eine entsprechende Führungs- und Dichtungsschiene aus flexiblem Material, welche mit reichlichem Spiel den Zwischenraum zwischen dem Flansch der Fensteröffnung und der Blendschale ausfüllt, so daß sie gegen die beiden Teile angepreßt wird und insbesondere bei angehobener Fensterscheibe eine zuverlässige Abdichtung zwischen diesen Teilen herstellt.

Da, wie bereits erwähnt, bei der erfindungsgemäßen Fahrzeugtür zum Befestigen der Fensterrahmen keinerlei Schweiß- oder Schraubverbindungen erforderlich sind, sind gemäß einer weiteren Ausgestaltung der Erfindung das Innen- und Außenblech der Rohtür lediglich mittels Falzen aneinander befestigt, wobei in diese Falze jeweils Isoliermaterial eingelegt ist, welches den metallischen Kontakt zwischen benachbarten Teilen verhindert, der sonst zur Korrosion führen könnte.

Die Blendschale kann aus Metallblech oder Metallguß, etwa Aluminium hergestellt werden, ist aber bevorzugt aus glasfaserverstärktem Kunststoff oder Kunststoffguß gebildet. Die Ausbildung der Blendschale als Gußteil oder optimales Gußteil insbesondere aus Kunststoff macht es möglich, daß die obenerwähnten Vorsprünge zur Befestigung der Fenster-Dichtungsleiste von vornherein angeformt werden können. Ferner kann bevorzugt die Sichtfläche der Blendschale entsprechend dem Aussehen der Verkleidung mit einer Stoff- oder lederartigen Struktur versehen werden.

Soweit ein geeigneter Kunststoff zur Herstellung der Blendschale verwendet wird, wie etwa ABS, ist es auch möglich, die gegebenenfalls durch Metalleinlagen verstärkte Blendschale an ihrer Sichtfläche ganz oder stellenweise aufzuschäumen, so daß sie geringe Härte aufweist. Dies stellt einen besonders wesentlichen Beitrag zur Steigerung der inneren Sicherheit des Fahrzeugs dar, weil bisher die oberen Teile der Fahrzeugtür bei Lastkraftwagen regelmäßig, aus einem Material gebildet waren, das beim Aufprall völlig unnachgiebig ist.

Gemäß einer weiteren Ausgestaltung der Erfindung sind Armaturen und/oder deren Halterungen an der Innenoberfläche der Blendschale mit angeformt, etwa die Armlehne insbesondere aus einem aufgeschäumten Abschnitt der Blendschale, die Gehäuse für den Innenöffner, die Halterung für die Innensicherung, die Halterung für den Vorreiber, Haltegriffe, ein Ablagefach oder dgl.

Es ist im Prinzip möglich, die Blendschale auf der Rohtür aufzuschrauben. Um aber die bereits erwähnten Entstehungsstellen für Korrosion zu vermeiden, sind gemäß einer weiteren Ausgestaltung einer Erfindung an der Innenoberfläche der Rohtür Langlöcher angeordnet, welchen gegenüberliegend an der zugewandten Oberfläche der Blendschale Zapfen mit verdickten oder umgewikkelten Enden angebracht bzw. angeformt sind. Die Orientierung der Langlöcher ist hierbei derart vorgenommen, daß in einer bestimmten Lage die Blendschale auf die Rohtür aufgedrückt und anschließend verschoben werden kann, wobei die Blendschale fixiert wird, so daß sie während des normalen Fahrbetriebes nicht ihre Lage verläßt.

Der Gegenstand der Erfindung ist anhand der beigefügten, schematischen Zeichnungen beispielsweise noch näher erläutert.

In dieser Zeichnung ist:

Fig. 1 die Innenansicht der linken Tür eines Lkw-Führerhauses,

Fig. 2 in vergrößertem Maßstab ein Schnitt längs Linie II–II in Fig. 1

Fig. 3 in vergrößertem Maßstab ein Teilschnitt längs Linie III–III in Fig. 1, und

Fig. 3a und 3b Einzelheiten der Fig. 3 in Blickrichtung IIIa bzw. IIIb.

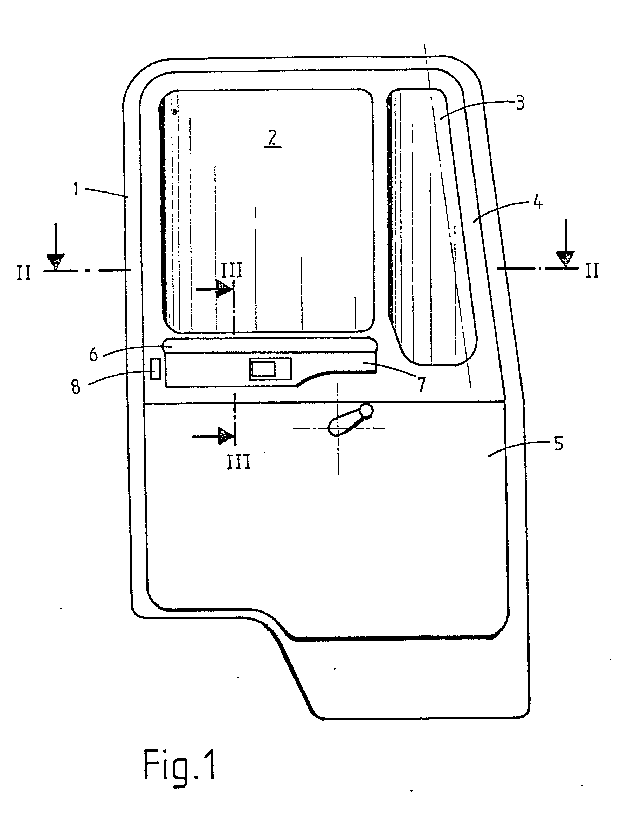

Die Fahrzeugtür 1 der Fig. 1 weist ein Hubfenster 2 und ein Ausstellfenster 3 auf, deren Betätigungseinrichtungen der besseren Deutlichkeit halber weggelassen sind.

Der obere Teil der Tür 1 ist auf deren Innenseite durch eine Blendschale 4 abgedeckt, welche sich an ihrer Unterseite bündig an eine Verkleidung 5 anschließt.

Unterhalb des Hubfensters 2 sind an der Innenoberfläche der Blendschale 4 ein Handgriff 6 zum Zuziehen der Tür, eine Armstütze 7 und ein Türriegel 8 angebracht.

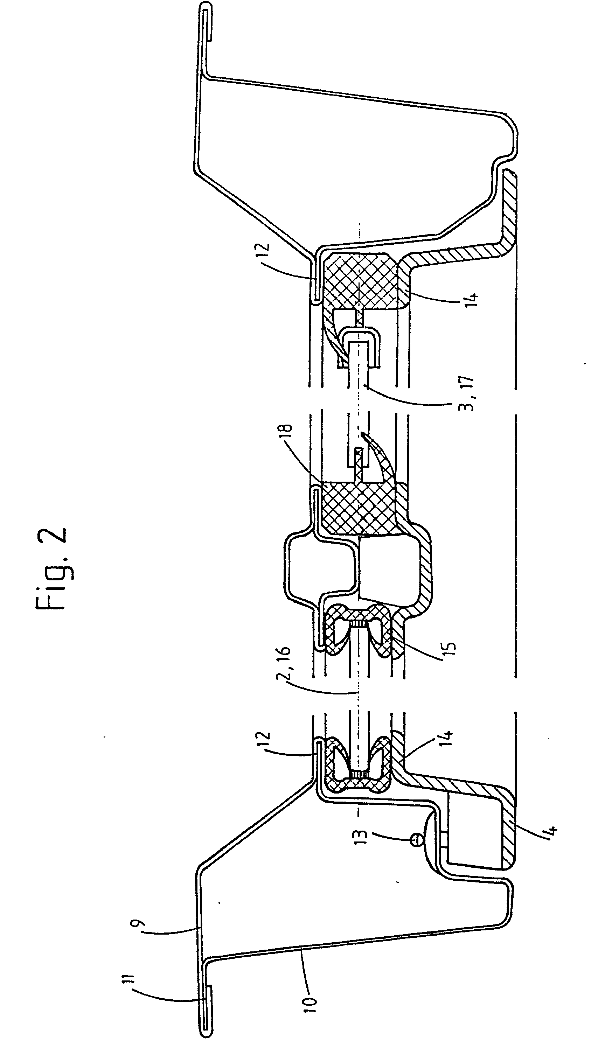

Wie aus Fig. 2 ersichtlich, weist die Fahrertür 1 eine Rohtür auf, welche aus einem Außenblech 9 und einem Innenblech 10 gebildet ist, welche am Außenumfang der Tür 1 mittels eines Falzes 11 aneinander befestigt sind. Im Bereich der Öffnungen der Fenster 2 und 3 sind Außen- und Innenblech 9, 10 ebenfalls zusammengebördelt, und zwar jeweils unter Bildung eines Außenflansches 12.

An der Innenseite der Rohtür weist deren Innenblech 10 eine umlaufende Einstülpung auf, in welcher die Blendschale 4 derart eingesetzt ist, daß die Innenoberfläche von Blendschale 4 und Innenblech 10 eine bündig durchgehende Fläche bildet.

Die Blendschale 4 ist am Innenblech 10 mittels Befestigungseinrichtungen 13 angebracht.

Die Blendschale 4 weist zu den Fensteröffnungen der Rohtür 1 komplementäre Öffnungen auf, welche jeweils von einem Innenflansch 14 begrenzt sind, der dem Außenflansch 12 der Rohtür gegenüberliegt.

Im Bereich des Hubfensters 2 ist zwischen Außen- und Innenflansch 12, 14 eine flexible Dichtungsschiene 15 eingelegt, welche ein allgemein U-förmiges Profil aufweist, dessen Schenkel unter Bildung von Dichtungslippen einwärts umgestülpt sind, wobei die gegenüberliegenden Oberflächen der umgestülpten Enden der Schenkel ebenfalls eine Beflockung aufweisen.

Zwischen den Führungsschienen 15 ist beweglich eine Glasscheibe 16 angeordnet, welche gegen die Beflockung der Führungsschiene 15 anliegt.

Infolge der Federfähigkeit des flexiblen Materials der Führungsschiene 15 liegen die Außenseiten ihrer Schenkel stets dichtend gegen die Innenoberfläche des Außenflansches 12 bzw. die Außenoberfläche des Innenflansches 14 an.

Das Ausstellfenster 3 weist eine Fensterscheibe 17 und einen Rahmen 18 auf, der aus flexiblem Material gebildet ist und einen zwischen Außenflansch 12 und Innenflansch 14 eingeklemmten Profilabschnitt aufweist, welcher mit Dichtungslippen versehen ist, welche an der Vorderseite der Scheibe 17 gegen deren Schmalseite und Außenfläche sowie an der Hinterseite gegen die Schmalseite und Innenfläche anliegen. Es ist aus den Zeichnungen ersichtlich, daß diese Dichtungslippen bei geschlossener Scheibe 17 in dichtendem Eingriff mit dieser treten, während dann, wenn sie gemäß Fig. 2 im Uhrzeigersinn ausgeschwenkt ist, außer Eingriff treten, ohne dabei jedoch umgeknickt zu werden und somit Schaden zu nehmen.

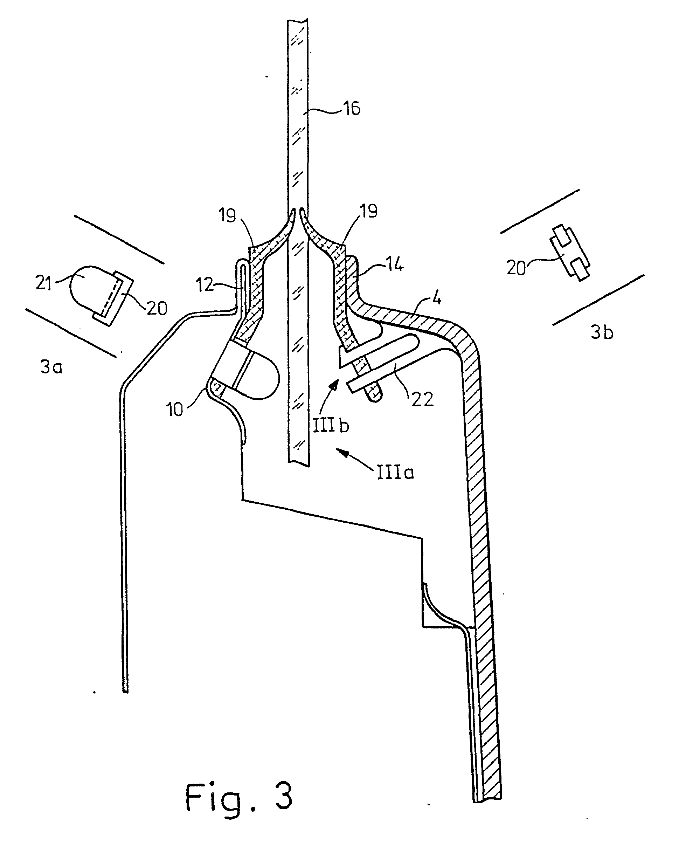

In Fig. 3 ist ein Vertikalschnitt durch das Hubfenster 2 gezeigt. An der Unterseite der Fensteröffnung ist beiderseits der Scheibe 16 jeweils ein Lippendichtungsstreifen 19 angeordnet, welcher im Bereich seiner Unterkante Schlitze 20 (Fig. 3a, Fig. 3b) aufweist.

Der Lippendichtungsstreifen 19 ist derart profiliert, daß er an der Innenoberfläche des Innenblechs 10 bzw. dem Bereich 13 der Blendschale 4 anliegt, den Außen- bzw. Innenflansch 12, 14 überragt und dann sich in einer federnden Lippe zur Scheibe 16 hin erstreckt.

Im Anlagebereich zwischen Dichtungsstreifen 19 und Innenblech 10 sind aus diesem Laschen 21 ausgestanzt, welche durch die Schlitze 20 hindurchgesteckt und umgebogen sind (Fig. 3a), während an der Innenoberfläche der Blendschale 4 längsgeschlitzte, schmale Zungen 22 mit überstehenden Endkanten angeformt sind, auf welche der zugehörige Dichtungsstreifen 19 aufgerastet ist (Fig. 3b).

## Patentansprüche

1. Fahrzeugtür, insbesondere Lkw-Fahrerhaustür, aus einem Innen- und Außenblech (10, 9), die aneinander befestigt sind und eine Rohtür bilden, deren Innenseite mindestens zum Teil durch eine Verkleidung (5) abgedeckt ist, und mit mindestens einer insbesondere beweglich angeordneten Fensterscheibe (16), die über einen Rahmen dichtend mit der Rohtür verbunden ist, wobei die Rahmen-Außenseite auf einem Vorsprung (21, 22) der Rohtür aufsitzt, dadurch gekennzeichnet, daß der oder die Rahmen (15, 18) auf der Innenseite gegen eine steife Blendschale (4, 14) anliegen, die auf der Innenseite der Rohtür (9, 10) aufgesetzt und befestigt ist und bevorzugt mindestens einen Teil der Verkleidung (5) bildet.

2. Fahrzeugtür nach Anspruch 1, dadurch gekennzeichnet, daß an der Innenseite der Rohtür (9, 10) nahe mindestens einem der Rahmen (15, 18) Laschen (21) ausgestanzt sind, die zur Anlage an der Innenseite des in die Rohtür (9, 10) eingelegten Rahmens (15, 18) umbiegbar sind.

3. Fahrzeugtür nach einem der Ansprüche 1 oder 2, mit einem Ausstellfenster, dessen Rahmen aus einem schwenkbaren Rahmenteil gebildet ist, das an der Ober- und Unterseite einen Schwenkzapfen aufweist, und einem ortsfesten Dichtrahmen aus flexiblem Material, an dem das Schwenklager für den oberen Schwenkzapfen eingelassen ist, wobei ein unteres, mit einer Bremse versehenes Schwenklager für den unteren Schwenkzapfen vorgesehen ist, dadurch gekennzeichnet, daß das untere Schwenklager in den Dichtrahmen (18) eingelassen ist.

4. Fahrzeugtür nach einem der Ansprüche 1–3, mit einem Schacht unter dem Rahmen mindestens einer der Fensterscheiben und einer Hubeinrichtung für diese, wobei am rahmenseitigen Ende des Schachtes beiderseits der Fensterscheibe ein ortsfester an diesen anliegenden Dichtungsstreifen angeordnet ist, dadurch gekennzeichnet, daß der eine Dichtungsstreifen (19) an der Rohtür (9, 10) und der andere an der Blendschale (4) befestigt ist.

5. Fahrzeugtür nach Anspruch 4, dadurch gekennzeichnet, daß mindestens einer der Dichtungsstreifen (19) an seiner zur Befestigung eingerichteten Unterkante mit Abstand angeordnete Befestigungsschlitze (20) aufweist, daß an der Innenseite der Rohtür (9, 10) Laschen (21) ausgestanzt sind, die in die Schlitze (20) eingeführt und umgebogen sind, und/oder daß an der der Rohtür (9, 10) zugewandten Seite der Blendschale (4) federnde, vorspringende Zungen (22) angebracht und insbesondere angeformt sind, die in die Schlitze (20) eingerastet sind.

6. Fahrzeugtür nach einem der Ansprüche 4 oder 5, dadurch gekennzeichnet, daß der Rahmen als Fensterführungsschiene (15) aus flexiblem Material ausgebildet ist.

7. Fahrzeugtür nach einem der Ansprüche 1–6, dadurch gekennzeichnet, daß die die Rohtür bildenden Bleche (9, 10) nur durch Falze (11, 12) miteinander verbunden sind, und daß in die Falze Isoliermaterial eingelegt ist.

8. Fahrzeugtür nach einem der Ansprüche 1–7, dadurch gekennzeichnet, daß die Blendschale (4) aus Metallblech, Metallguß, glasfaserverstärktem Kunststoff oder Kunststoffguß gebildet ist.

9. Fahrzeugtür nach Anspruch 8, dadurch gekennzeichnet, daß Armaturen (6, 7, 8) und/oder deren Halterungen an der Innenoberfläche der Blendschale (4) angeformt sind.

10. Fahrzeugtür nach einem der Ansprüche 1–9, dadurch gekennzeichnet, daß die Sichtfläche der Blendschale (4) insbesondere entsprechend der Sichtfläche der Verkleidung (5) strukturiert und/oder gefärbt ist, und daß in der Innenoberfläche der Rohtür (9, 10) Langlöcher angeordnet sind, und daß an der diesen zugewandten Oberfläche der Blendschale (4) entsprechende Zapfen mit verdickten oder umgewinkelten Enden angeordnet und insbesondere angeformt sind.

## Claims

1. A vehicle door, more particularly a lorry cab door, comprising an inner and an outer metal sheet (10, 9), which are secured to one another and form a door base, whose inner surface is at least partially covered by a panelling (5), and having at least one window pane (16), which is more particularly displaceably arranged and which is connected in a sealing-tight manner with the door base via a frame, the frame outside resting on a projection (21, 22) of the door base, characterised in that the frame or frames (15, 18) rest on the inside against a rigid shell facing (4, 14), which is mounted and secured on the inside of the door base (9, 10) and preferably forms at least part of the panelling (5).

2. A vehicle door according to claim 1, characterised in that on the inside of the door base (9, 10) in the vicinity of at least one of the frames (15, 18) tabs (21) are punched out, which can be bent over to abut against the inside of the frame (15, 18) fitted into the door base (9, 10).

3. A vehicle door according to one of claims 1 or 2, comprising a ventilator window, whose frame is formed by a pivotable frame part, which comprises a swivel pin at the top and bottom, and a stationary sealing frame made of flexible material in which frame the pivot bearing for the upper swivel pin is formed, a lower pivot bearing having a buffer being provided for the lower swivel pin, characterised in that the lower pivot bearing is formed in the sealing frame (18).

4. A vehicle door according to any one of claims 1 to 3, comprising a shaft under the frame of at least one of the window panes and a lifting device for the latter, a stationary sealing strip being arranged at the frame end of the shaft on both sides of the window pane, which sealing strip rests on the shaft, characterised in that one of the sealing strips (19) is secured to the door base (9, 10) and the other to the shell facing (4).

5. A vehicle door according to claim 4, characterised in that at least one of the sealing strips (19) comprises at its lower securing edge securing slots (20) which are spaced apart, in that on the inside of the door base (9, 10) tabs (21) are punched out, which are introduced into the slots (20) and bent over, and/or in that on the side of the shell facing (4) facing the door base (9, 10) resilient, projecting tongues (22) are arranged and more particularly formed on, which are engaged in the slots (20).

6. A vehicle door according to one of claims 4 or 5, characterised in that the frame is formed as a window guide track (15) made of flexible material.

7. A vehicle door according to any one of claims 1 to 6, characterised in that the metal sheets (9, 10) forming the door base are only connected to one another by folds (11, 12), and in that insulating material is inserted into the folds.

8. A vehicle door according to one of claims 1 to 7, characterised in that the blind shell (4) is made of sheet metal, cast metal, glass fibre-reinforced plastics material or moulded plastics material.

9. A vehicle door according to claim 8, characterised in that fittings (6, 7, 8) and/or their mountings are formed onto the inner surface of the shell facing (4).

10. A vehicle door according to any one of claims 1 to 9, characterised in that the visible surface of the shell facing (4) is structured and/or coloured in particular according to the visible surface of the panelling (5), in that slots are disposed in the inner surface of the door base (9, 10), and in that on the surface of the shell facing (4) facing said slots corresponding lugs with enlarged or bent-over ends are arranged and more particularly formed on.

**Revendications**

1. Porte de véhicule, notamment porte de cabine de conduite de camion, constituée par une tôle intérieure (10) et une tôle extérieure (9), fixées l'une sur l'autre et formant une porte brute, dont la face intérieure est recouverte au moins en partie par un revêtement (5) et avec au moins une vitre de fenêtre (16), notamment à disposition mobile, qui est reliée de façon étanche à la porte brute par l'intermédiaire d'un châssis, le côté extérieur du châssis s'appliquant sur une saillie (21, 22) de la porte brute, caractérisée en ce que le ou les châssis (15, 18) s'appliquent du côté intérieur contre une enveloppe écran rigide (4, 14), qui est posée et fixée sur la face intérieure de la porte brute (9, 10) et qui constitue de préférence au moins une partie du revêtement (5).

2. Porte de véhicule selon la revendication 1, caractérisée en ce que, sur la face intérieure de la porte brute (9, 10), à proximité d'au moins l'un des châssis (15, 18), sont découpées des pattes (21) qui peuvent être repliées pour s'appliquer sur la face intérieure du châssis (15, 18) inséré dans la porte brute (9, 10).

3. Porte de véhicule selon l'une des revendications 1 ou 2, avec une fenêtre déflecteur dont le châssis est formé par une partie de châssis pivotante comportant un tourillon de pivotement sur son côté supérieur et son côté inférieur, et par un châssis d'étanchéité en matière souple à position fixe, sur lequel est encastré le palier de pivotement pour le tourillon de pivotement supérieur, un palier de pivotement inférieur muni d'un frein étant prévu pour le tourillon de pivotement inférieur, caractérisée en ce que le palier de pivotement inférieur est encastré dans le châssis d'étanchéité (18).

4. Porte de véhicule selon l'une des revendications 1 à 3, avec une cage sous le châssis d'au moins l'une des vitres et un dispositif de levage pour celle-ci, une bande d'étanchéité étant disposée à l'extrémité côté châssis de la cage de chaque côté de la vitre en s'appliquant en position fixe sur celle-ci, caractérisée en ce que l'une des bandes d'étanchéité (19) est fixée sur la porte brute (9, 10) et que l'autre bande est fixée sur l'enveloppe-écran (4).

5. Porte de véhicule selon la revendication 4, caractérisée en ce qu'au moins l'une des bandes d'étanchéité (19) présente des fentes de fixation (20) disposées à distance sur son bord inférieur agencé pour la fixation, en ce que des pattes (21) sont découpées sur la face intérieure de la porte brute (9, 10) ces pattes étant introduites dans les fentes (20) et repliées, et/ou en ce que des languettes en saillie (22) sont disposées et notamment moulées sur le côté de l'enveloppe-écran (4) dirigé vers la porte brute (9, 10), ces languettes étant enclenchées dans les fentes (20).

6. Porte de véhicule selon l'une des revendications 4 ou 5, caractérisée en ce que le châssis est réalisé sous forme de rail de guidage de fenêtre (15) en matière souple.

7. Porte de véhicule selon l'une des revendications 1 à 6, caractérisée en ce que les tôles (9, 10) constituant la porte brute ne sont assemblées entre elles que par des plis (11, 12), de la matière isolante étant insérée dans les plis.

8. Porte de véhicule selon l'une des revendications 1 à 7, caractérisée en ce que l'enveloppe-écran (4) est constituée de tôle métallique, de métal moulé, de matière plastique armée de fibres de verre ou de matière plastique moulée.

9. Porte de véhicule selon la revendication 8, caractérisée en ce que des garnitures (6, 7, 8) et/ou leurs supports sont formés sur la surface intérieure de l'enveloppe-écran (4).

10. Porte de véhicule selon l'une des revendications 1 à 9, caractérisée en ce que la surface visible de l'enveloppe-écran (4) est structurée et/ou colorée, notamment suivant la surface visible du revêtement (5), en ce que les perçages oblongs sont disposés dans la surface intérieure de la porte brute (9, 10) et en ce que sur la surface de l'enveloppe-écran (4) dirigée vers ces perçages sont disposés et notamment moulés des tétons correspondants avec des extrémités épaissies ou rabattues.

II

III

1

2

3

4

5

6

7

8

II

III

# Fig.1

Fig. 2

Fig. 3